# EUROPEAN PATENT SPECIFICATION

(11) **EP 1 165 406 B1**
(45) Date of publication and mention of the grant of the patent: **17.05.2006**
(21) Application number: 00906803.2
(22) Date of filing: 17.01.2000
(51) Int. Cl.: B65F 5/00, E04F 17/12, B65G 53/24

(54) **REFUSE TRANSPORT SYSTEM**
MÜLLTRANSPORTSYSTEM
SYSTEME DE TRANSPORT DES ORDURES

(30) Priority: 05.02.1999 SE 9900401; 03.12.1999 SE 9904423
(43) Date of publication of application: 02.01.2002
(73) Proprietor: Centralsug Aktiebolag, 117 84 Stockholm (SE)
(72) Inventor: HYDÉN, Hans, S-162 46 Vällingby (SE); JANKEVICS, Verner, S-165 71 Hässelby (SE); HAMMAR, Rune, S-423 55 Torslanda (SE)
(74) Representative: Stenborg, Anders Vilhelm
(86) International application number: PCT/SE2000/000077
(87) International publication number: WO 2000/046129

(56) References cited:
- EP-A1- 0 127 596
- WO-A1-98/47788
- GB-A- 1 522 631
- US-A- 3 887 053
- US-A- 4 108 498

## Description

### TECHNICAL FIELD

The present invention relates generally to pneumatic refuse transport systems, and specifically concerns the emptying of refuse temporarily stored in such systems.

### BACKGROUND

In pneumatic transport systems of the kind generally known as vacuum-operated refuse collection systems (see i.e. US Patent no. 3 887 053), refuse is temporarily collected in insertion chutes provided in buildings or outside buildings - so called isolated insertion chutes - and is sequentially transported from individual insertion chutes to a collection center through transport pipes and branches. Such systems have been in use for many years, and have proven to be very efficient as well as constituting a very satisfactory solution to the sanitary problems accompanying other refuse handling systems. However, in systems of this kind the demand for optimized operation of the system becomes stronger and stronger as systems are incorporated in, or associated with, larger and larger apartment buildings and other buildings where there is an increase in the amount of refuse collected in each insertion chute during a given period of time. This applies also to applications where a collection center collects refuse from an increasing number of insertion chutes, in areas such as dense residential areas. In such applications provisions have to be made in order to optimize the collecting capacity of the system, both with regard to the storage capacity of the individual insertion chute and to the effective emptying of the increasing number of insertion chutes.

Specifically, in certain systems the temporary storage capacity of at least specific, frequently used insertion chutes has already been raised by the aid of different means for increasing their temporary storage volume. Examples of such means are the refuse limitation valve discussed in our international application WO 98/47788, providing additional storage space in the chute itself, as well as the attempts made to provide expanded storage volumes in the form of simple containers in the chutes, at a position above a discharge valve. However, even with such extended temporary storage capacities, the increased load on the specific insertion chute will eventually still result in an equally increased overall time required to securely empty all of the refuse collected in said expanded chute over a given period of time. This in turn affects the entire system, and will constitute a problem, especially in the above discussed larger systems, where the actual emptying cycles of the system may be extended to a degree where it may no longer be possible to operate the system securely in situations with heavy loads.

In the large and/or heavily loaded system, a bottleneck of the system will therefore be the emptying times of the individual, frequently used chutes, and not least in the above mentioned situations where measures are taken for expanding the collection volume of individual chutes. In fact, the emptying of such expanded storage volumes often leads to additional problems, especially in situations where attempts are made to speed up the emptying process in order to reduce the overall cycle time of the system. Such problems are mainly related to disturbances both in the discharge of the refuse from the chute or from the expanded volume and in the transportation of the refuse through the transport pipe system. Expressed otherwise, the major problems concern the complete and secure emptying of the individual chutes in the shortest possible time.

Conventionally the insertion chutes are emptied through a refuse discharge valve provided at the lower end of the chute. The discharge valve leads into the transport pipe system of the collection system and serves to seal off the insertion chute from the subatmospheric pressure in the transport pipe between the emptying phases thereof. When emptying an insertion chute, the associated discharge valve is opened to apply suction, in turn developing a drag force to the stored refuse, by means of the vacuum in the transport system. Air at substantially atmospheric pressure is introduced to create an air flow moving the stored refuse. Said atmospheric air is introduced through an air intake valve positioned at the end of a branch of the transport system and/or through air intake openings in the discharge valve or in the upper end of the actual insertion chute.

Traditionally, shortening of the emptying times for the insertion chutes has been attempted by increasing the vacuum in the transport pipes of the system, but this solution gives rise to a new problem since the increase of the vacuum will likewise increase the danger of compacting the refuse too much, resulting in a plug flow that may cause blockage in the pipes of the system. As an example, such blockage may shut down an entire branch line or transport line.

Another problem related to the employment of increased vacuum levels is the noise generated by the resulting air flow through the insertion chute in connection with emptying. Such increased noise levels are in most cases not accepted, since they at the least constitute a sanitary nuisance. Likewise, an increased vacuum will cause problems with regard to the insertion openings of the chutes. Said insertion openings are provided with doors that may be opened for the insertion of refuse into the chute, and that are then closed again. In systems where the insertion of refuse is permitted even during emptying of a chute, an increased vacuum level could cause severe injuries, such as by forcing an opened insertion door to close rapidly and jam or even crush the arm or hand of a person that is about to discharge of refuse.

Yet another way of increasing the emptying capacity of the system would theoretically be to widen the transport pipes and branches. However, this possibility is only applicable to new transport systems, since it is not feasible to replace pipes already laid down into the ground. In practice this solution is also disregarded for most new systems, since the additional costs for the larger pipe system as well as for generating the same vacuum level with the increased transport pipe volume, would not be acceptable.

### SUMMARY

The invention basically concerns a vacuum operated refuse collection system generally comprising a number of individual storage spaces intended for temporary storage of refuse inserted therein. The individual storage spaces of the system are emptied in a predetermined or controlled sequence, by operating discharge valves through which the storage spaces communicate with a transport pipe or transport pipe branch. As normal in such a system a vacuum, i.e. a subatmospheric pressure, is created in the transport pipes or branches, and by means of this vacuum the stored refuse is transported from the individual storage spaces to a collection central, as the corresponding discharge valve is opened and transport air is let in through an air inlet.

As mentioned above, today, refuse collection systems of this kind are required to handle larger and larger amounts of refuse. This in turn has led towards the development of larger and larger temporary storage spaces of different geometry, thereby offering higher emptying resistance that has to be overcome in order to provide a satisfactory material flow out from the storage space, without endangering blockage, temporary as well as stationary, during emptying and transport. In order to compensate for this higher emptying resistance it would traditionally be considered increasing the vacuum level of the system. However, such an increase in the vacuum level would, especially so in combination with high load operation of the system and the accompanying variations in both material flow and transport air flow, dramatically increase the risk of too high material concentration in the transport air and, as an extreme, of plug flow.

The invention overcomes the above problems in an efficient and satisfactory manner.

Accordingly, it is a general object of the invention to provide a simple and comparatively inexpensive solution to the problem of providing a secure and efficient emptying of the temporarily stored refuse in a vacuum operated refuse collection system, while maintaining an effective and secure transport of the refuse through the transport lines of the system.

In particular, it is an object of the invention to apply an initial appropriate drag force to the stored refuse, securing a rapid emptying of the refuse temporarily stored in individual storage spaces of the collection system, and to do so without causing any excessive compaction of the refuse, thereby providing excellent conditions for maintaining a desired transport flow of the refuse through the entire transport system.

Another object of the invention is to provide an improved method of emptying a refuse insertion chute of a vacuum-operated refuse collection system, providing a controlled emptying adapted to the prevailing circumstances of the system.

Yet another object of the invention is to provide an improved insertion chute for a vacuum operated refuse collection system, designed so as to provide excellent conditions for obtaining a secure and efficient emptying of the refuse stored in a specific refuse storage space therein.

These and further objects of the invention are met by the invention as defined in the appended patent claims.

Briefly, the invention suggests controlling the drag force applied to the refuse material as well as the mixing of material and transport air, whereby this control is preferably performed during the entire emptying phase in order to optimize material flow during the entire emptying phase of the individual storage space. This solution permits the use of higher vacuum levels in the system without risking any of the problems normally accompanying such higher levels, and more specifically provides possibilities for applying an initial heavy pull on the refuse material, securely overcoming the static friction of the material, i.e. the emptying resistance. Once the material has been accelerated to a normal transport velocity during the initial emptying phase, it will not be very likely to cause blockage in any other part of the transport system. By also controlling the mixing of air and material once the emptying resistance has been overcome, that is the material concentration in the transport air flow, the risk of plug flow may be safely eliminated.

By securing a controlled intake of additional air at substantially atmospheric pressure in at least one position upstream, with regard to the direction of material flow therethrough, of the discharge valve, the control of the vacuum and thus of the drag force may be accomplished in a very effective manner.

By additionally introducing the additional air directly into the refuse material to control the concentration thereof in the transport air, the additional air may advantageously be employed as a kind of air knife, to loosen the material and improve its mixing with the transport air.

The control function of the invention may initially be set based on the design characteristics of a specific application, such as general vacuum level, geometrical conditions etc. In one embodiment said control function may alternatively or additionally also be integrated in a sequence control system, controlling the order in which the individual storage spaces of the collection system are emptied, depending upon several detected parameters. Such parameters may be the expected fill rate of a chute, the actual fill rate of the chute, the position of the chute in the entire system, and/or the type of refuse to be transported in the system etc.

Another aspect of the invention specifically relates to applications with refuse insertion chutes being provided with an expanded storage capacity, and is basically directed to controlling the intake of additional air by-passing the expanded storage capacity. This intake of additional air that serves the purpose of moderating the vacuum level upon opening of the discharge valve and of loosening the stored refuse material, is, in each case, regulated depending upon the specific design characteristics, such as the geometry and size of the expanded storage volume, and the operational characteristics of the system, such as general vacuum level in the transport pipe system, fill rate of the chute, type of refuse etc. In this manner it is possible to control the entire emptying phase of the insertion chute, taking account of the specific conditions of the application, such as the emptying resistance caused by the specific geometry of the expanded storage volume as well as by different fractions of refuse.

In one embodiment the additional air is introduced to a corresponding chute air inlet through an additional air pipe separated from the transport air inlet, being provided in the upper part of or upstream of the expanded storage volume, in order to provide an introduction of additional air that is regulated independently of the introduction of transport air.

In an alternative embodiment an additional air pipe is connected to a transport air pipe upstream of the expanded storage volume so that additional air and transport air is taken in through a common main air inlet. In this case a regulation of the introduction of additional air will automatically affect the introduction of transport air, since the flow of air through the main air inlet is fixed and is split up between the two branches depending upon the regulation of the additional air supply. This provides for a very efficient control of the compaction of the refuse material caused by the transport air flow and of the material concentration in the transport air.

Yet another aspect of the invention concerns a refuse insertion chute of a refuse collection system, said chute being provided with an expanded storage capacity. In accordance with this aspect of the invention an additional air control valve is provided in a supply pipe for the additional air, whereby the introduction of the additional air into the refuse material may be regulated.

Preferred embodiments of the different aspects of the invention are specified in the respective dependent subclaims.

In summary, the present invention provides for the following advantages over the state of the art:
- Efficient and rapid emptying of relatively large refuse storage volumes;
- The risk of creating a detrimental plug-flow is greatly reduced;
- The risk of blockages during emptying of the stored refuse volume as well as during transport of the refuse through the transport pipe system, can be substantially eliminated by the provision of a possibility to control the emptying as well as the transport phase in dependence upon detected operational parameters;
- Provides possibilities for quick and exact regulation of the vacuum level in order to prohibit any critical vacuum levels from being generated;
- Permits secure and complete emptying of the chute, and
- Makes it possible to delete one or more air inlet valves in the transport pipe system.

Other advantages offered by the present invention will be readily appreciated upon reading the below detailed description of embodiments of the invention.

### BRIEF DESCRIPTION OF THE DRAWINGS

The invention, together with further objects and advantages thereof, may best be understood by making reference to the following description taken together with the accompanying drawings, in which:
- Fig. 1: is a partly schematical side view of the lower area of an insertion chute of a vacuum operated refuse collection system, illustrating a first embodiment of an air valve arrangement according to the invention, and
- Fig. 2: is an illustration, in a view similar to that of fig. 1, of a second embodiment of an air valve arrangement according to the invention.

### DETAILED DESCRIPTION

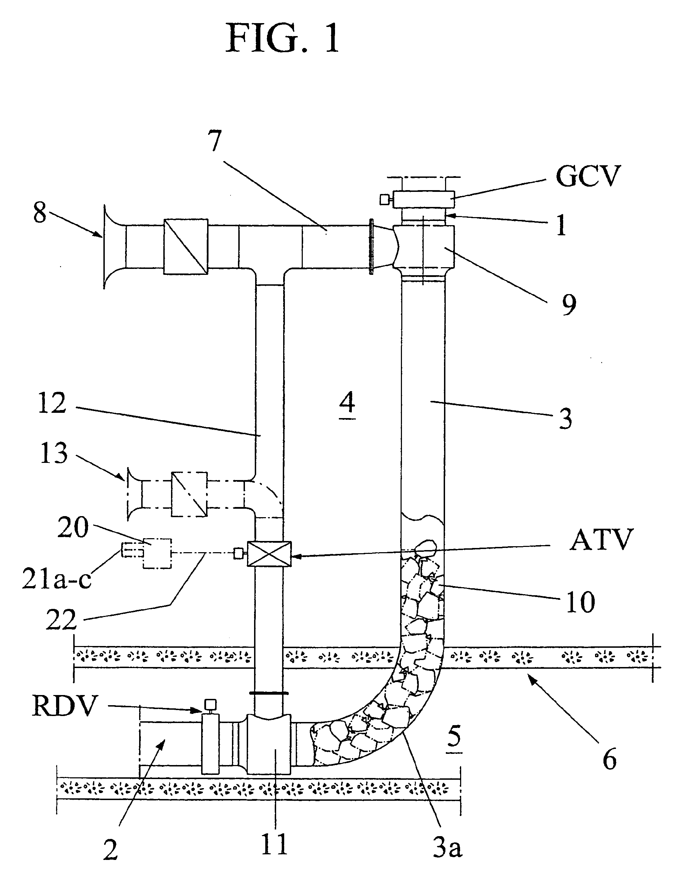

A first embodiment of the invention will now be described with reference to fig. 1, which illustrates the lower part of a refuse insertion chute 1 arranged in a storage room 4 provided in the first floor or a cellar of a very schematically indicated building 6. The lower part of the chute 1 communicates with a transport pipe branch 2 of the refuse collection system through a refuse discharge valve RDV which is operable between fully opened and fully closed positions for performing an emptying phase, as will be discussed further below. The transport pipe branch 2 is illustrated laid horizontally in a culvert 5 underneath the building, and leads to a collection central (not shown).

In the illustrated embodiment the lowermost part of the insertion chute 1 is provided with an expanded storage volume 3, which in addition to the lower part of the traditional vertical insertion chute comprises a bend 3a connecting the insertion chute 1 to the horizontal transport pipe 2 through the discharge valve RDV thus also being positioned in a horizontal pipe. This embodiment of an expanded storage volume 3 for temporarily storing refuse 10 being inserted into the chute 1, presents a simple, inexpensive and yet very effective solution in situations where a temporary storage volume of up to approximately 1-1,3 m³ is required. However, such an expanded temporary storage volume 3 produces an increased emptying resistance due to its geometry, which in a traditional system would lead to emptying problems such as increased risk of plug flow or blockage in the storage space 3 as well as in the transport system 2.

The invention presents a solution to these problems by suggesting a method of controlling on the one hand the drag force applied to the temporarily stored refuse 10 during an initial part or step of the emptying phase, and on the other hand the mixing of additional air into the refuse 10 during the remaining part or second step of the emptying phase. Both of these effects are obtained by providing a controlled or regulated introduction of additional air into the chute 1.

A main air inlet 8, which in the conventional way is provided with a check valve (not specifically illustrated), is provided in the storage room 4, in some other suitable locality or in an outer wall of the building 6. Through this inlet 8 and a transport air supply pipe 7 connected thereto, transport air is introduced into the chute 1 through a transport air chute inlet 9, at a position in the upper part of the expanded storage volume 3. In an alternative embodiment it will also be possible to introduce the transport air upstream of the storage volume 3. In order to avoid sanitary nuisance caused by an increased noise level, and potentially hazardous air flow through the entire insertion chute 1 during emptying, a gravity chute valve GCV is preferably provided above the transport air chute inlet 9. Said gravity chute valve GCV will, in its closed position during emptying, completely seal off the upper part of the insertion chute 1. However, it may also be employed to provide a further temporary storage space for the refuse material 10, in the manner described in our earlier WO98/47788.

From the transport air supply pipe 7 is branched-off an additional air supply pipe 12 for introducing additional air into the insertion chute through an additional air chute inlet 11 that is positioned immediately upstream of the refuse discharge valve RDV. Theoretically, the additional air could also be introduced directly into the discharge valve, although this would create design problems. In the additional air supply pipe 12 is provided an additional air inlet valve ATV for controlling the introduction of additional air into the refuse 10. In the illustrated, preferred embodiment the additional air valve ATV is a pilot-operated valve connected to the output 22 of a control unit 20 for controlling the supply of additional air in accordance with a fixed or optional program, as will be described further below. The reference designations 21a-c do in this connection indicate inputs of different kinds to the control unit, for setting up or varying the program in response to detected values of operational parameters. The valve ATV itself may be of any kind allowing a variable flow regulation, such as a throttle valve.

In fig. 1, an alternative additional air inlet 13 is illustrated with dashdot-lines. In this embodiment the upper part of the additional air supply pipe 12, otherwise being connected to the transport air supply 7, is deleted, and replaced by a pipe bend leading to air inlet 13 that is completely separated from the transport air supply 7.

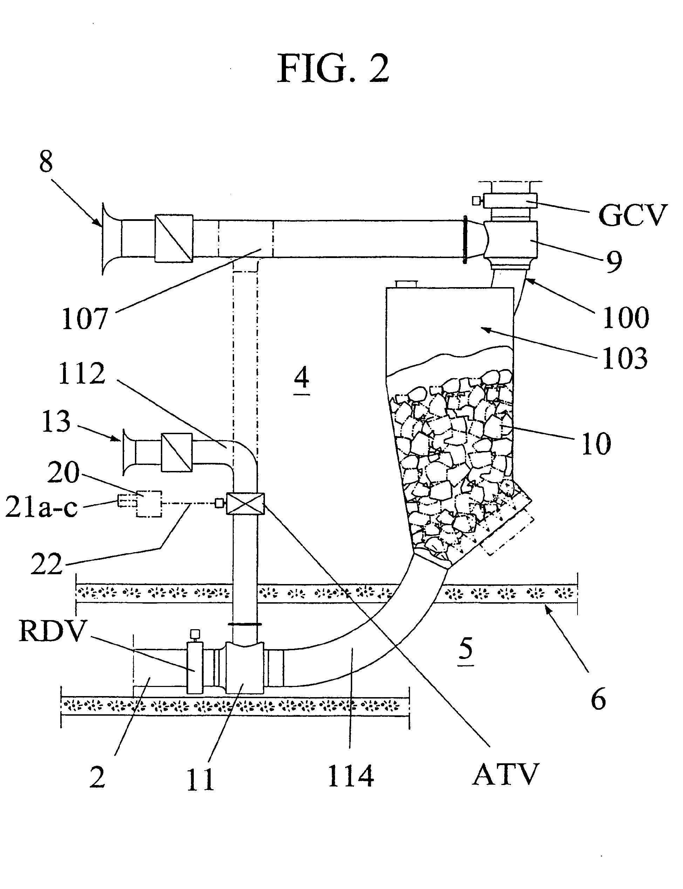

Fig. 2 illustrates a second embodiment of a refuse insertion chute 100 according to the invention. In this embodiment the insertion chute 100 is provided with an expanded, container-like storage space 103 having a cross-section considerably exceeding that of the chute 100. Such an expanded storage space 103 may provide a storage capacity of up to about 4m³, as is described in our Swedish Patent Application no. 9900401-2 to which reference is made herein for further details of such a storage space. The lower part of the storage space 103 is illustrated containing the feed-screw normally required to securely empty such an expanded storage space. However, used in combination with the present invention this kind of storage space will in some cases be effectively emptied also without the feed-screw that is drawn with dashdot lines to indicate this.

In fig. 2 the lower end of the storage space 103 is connected to the discharge valve RDV and the transport pipe 2 through a pipe bend 114, and the transport air chute inlet 9 is positioned in the chute 100 upstream of the storage space 103. Alternatively, the transport air supply pipe 107 may be connected to and open directly into the upper part of the storage space 103. Like in fig. 1 fig. 2 also illustrates the two optional additional air supplies, through a separate inlet 13 or as a by-pass through a pipe branched-off from the transport air supply line 107.

As mentioned above, the basic feature of the invention is to provide for a control or regulation of on the one hand the drag force applied to the stored refuse 10 and, on the other hand of the concentration of refuse material 10 in the transport air. The drag force will be controlled so as to initially, that is immediately upon opening of the discharge valve RDV, be at a level securing that an initial heavy pull is exerted on the refuse. This pull must be powerful enough to overcome the emptying resistance, that is the static friction, of the stored refuse material 10 and to accelerate the material 10 to the transport velocity required to achieve secure transport without blockage, through the entire transport pipe system and up to the collection central. On the other hand it must be secured that the applied drag force is not so high that it may cause excessive compaction of the refuse 10. According to the invention the concentration of refuse 10 in the transport air is therefore also controlled, to ensure that it does not become too high, thereby eliminating the risk of plug flow.

To achieve this the invention suggests providing a controlled or regulated introduction of additional air into the refuse 10, through the additional air chute inlet 11 immediately upstream of the discharge valve RDV. The control function is provided by the so called throttle valve ATV. An example of the control mode will now be given, although it should be emphasized that this may be varied quite extensively depending upon local variations, such as the type of refuse to be transported in the system, the geometrical and other design characteristics of the different parts of the vacuum operated collection system, and different chosen operational parameters, such as nominal vacuum level of the system.

In the normal case the emptying phase is started, i.e. the discharge valve is opened, when the nominal vacuum level of the system has been created in the transport pipe 2. At this stage it is secured that the throttle valve ATV is substantially closed - although, in practice it will be slightly open to permit a very restricted air flow therethrough - at the time when the discharge valve is opened. This will produce the desired initial pull. This substantially closed position of the throttle valve ATV is only maintained for a very short time. The exact duration of this substantially closed condition of the ATV will vary for each application, depending upon the above discussed characteristics and parameters. However, solely for the purpose of exemplifying this phase and in no way restricting the invention, it will be indicated that this time may be in the order of 1 second. After this opening phase, the ATV is partly opened, say providing approximately 50% of its maximum flow of additional air, thereby continuing the emptying phase with a moderate vacuum securing the initial pull or drag moment, but not risking any undue compacting of the refuse 10. This controlled introduction of additional air also provides for a controlled mixing of air into the refuse 10, thereby additionally optimizing the refuse material concentration in the transport air. The introduction of additional air may also be employed as a sort of air knife providing a very favorable loosening and mixing of the refuse material that will improve the transport characteristics.

Once the initial drag moment has been applied the introduction of additional air may normally be reduced by closing the throttle valve somewhat, to thereby increase the transport air flow through the temporary storage space 3, 103 and secure efficient and complete emptying thereof.

Favorably the complete emptying of the storage volume 3, 103 will be secured by terminating the emptying phase by opening throttle valve ATV, fully or to the nominal 50%, and then once more closing the valve and thus the flow of additional air, before closing the discharge valve RDV.

The pilot-operated throttle valve ATV and thus the introduction of additional air may in a basic application be controlled in accordance with a fixed program. Such a program may be time-controlled, started by the opening of the refuse discharge valve RDV and based on selected design characteristics of the system, said design characteristics being fed (indicated by the inputs 21a-c) to a control unit 20, the output 22 of which controls the pilot-operated throttle valve ATV.

As an alternative a more sophisticated control of the throttle valve ATV and thus of the supply of additional air may be performed in accordance with an optional program, based on a monitoring of chosen operational parameters (likewise indicated by the inputs 21a-c) of the system, the detected values being fed to the control unit 20. In this manner it will also be possible for instance to provide an exact control of the vacuum level in the system, which will normally be set to be in the order of 2-6 kPa, or even higher. Apart from monitoring the vacuum level, other parameters that may normally be employed for controlling the intake of the additional air are, the detected fill level of the insertion chute 1, 100 prior to emptying, detected, actual transport air flow, detected acceleration of the refuse material 10 etc.

Naturally, the basic setting of the optional program will normally also be made in accordance with selected design parameters of the system.

In applications where the emptying of the different insertion chutes of a refuse collection system is carried out in a sequence controlled by a program, such as the group-wise emptying and level-controlled emptying suggested in our Swedish Patent Application no. 9902719-5, it may be very advantageous to incorporate the control of the throttle valve ATV of the present invention into such an emptying sequence program.

The invention has been described herein with specific reference to preferred embodiments thereof employing more or less sophisticated control systems for regulating the intake of additional air. It should be emphasized though, that in its broadest scope the present invention also covers embodiments where the throttle valve ATV is regulated manually, either by an experienced operator, by following a set program or in accordance with detected values of the kinds discussed above, said detected values being presented to the operator in any conventional way.

Although the invention has been described and illustrated herein with specific reference to applications where an expanded temporary storage capacity is provided, that is applications where the invention will be particularly efficient, it should be emphasized that it is in no way restricted to such applications. The basic principles of the invention may be applied to most temporary storage spaces employed today in this kind of systems, that is in the traditional insertion chute where the refuse discharge valve is positioned in a vertical lowermost section of an insertion chute, in the so called isolated insertion chutes that are described in our earlier WO96/SE01150, as well as to future designs. The invention may likewise be applied to insertion chutes having other kinds of expanded storage spaces than those illustrated herein.

It will be understood by those skilled in the art that various modifications and changes may be made to the present invention without departure from the scope thereof, which is defined by the appended claims.

## Claims

1. A method of emptying a refuse storage space (3; 103) of a vacuum-operated refuse collection system, wherein refuse (10) temporarily stored in said storage space (3; 103) is discharged into a transport pipe (2) of the system upon opening of a refuse discharge valve (RDV), wherein a subatmospheric pressure is maintained in the transport pipe (2) during the entire emptying phase to apply a drag force to the refuse material (10) through the opened refuse discharge valve (RDV) and wherein air is introduced to the stored refuse material (10) during the emptying phase to provide a flow of transport air and refuse material, **characterized by** controlling the drag force applied to the stored refuse (10) and the concentration of refuse material (10) in the transport air, at least during the emptying phase.

2. A method of emptying a refuse storage space (3; 103) according to claim 1, **characterized by** controlling the level of the applied subatmospheric pressure during the emptying phase by a regulated intake of additional air at substantially atmospheric pressure in or immediately upstream of the refuse discharge valve (RDV).

3. A method of emptying a refuse storage space (3; 103) according to claim 2, **characterized by** controlling the transport air flow during the emptying phase in dependence upon the regulated introduction of additional air.

4. A method of emptying a refuse storage space (3; 103) according to claims 2 or 3, **characterized by** controlling the concentration of refuse material (10) in the transport air by introducing the additional air directly into the flow of refuse material (10) in or immediately upstream of the refuse discharge valve (RDV).

5. A method of emptying a refuse storage space (3; 103) according to claim 4, **characterized by** employing the additional air being introduced into the material as an air knife for loosening of the refuse material (10) and improved mixing thereof into the transport air.

6. A method of emptying a refuse storage space (3; 103) according to any of claims 2-5, **characterized by** controlling the intake of additional air based upon fixed design characteristics of the system.

7. A method of emptying a refuse storage space (3; 103) according to any of claims 2-6, **characterized by** controlling the intake of additional air based upon detected values of operational parameters of the system.

8. A method of emptying a refuse storage space (3; 103) according to any of claims 2-7, **characterized by** monitoring the actual vacuum level/drag force during emptying and by controlling the intake of additional air based upon the detected values.

9. A method of emptying a refuse storage space (3; 103) according to any of claims 1-8, **characterized by** initially decreasing the drag force applied to the stored refuse (10) in a first step and by subsequently, once the static friction of the material has been overcome, increasing the flow of transport air through the storage space in a second step.

10. A method of emptying a refuse storage space (3; 103) according to claim 9, **characterized by** sequentially repeating the first and second steps after the emptying phase, in order to secure complete emptying of the storage space (3; 103).

11. A method of emptying a refuse insertion chute (1; 100) of a vacuum-operated refuse collection system, wherein refuse (10) temporarily stored in an expanded storage space (3; 103) of said refuse chute (1; 100) is discharged into a transport pipe (2) of the system upon opening of a refuse discharge valve (RDV), wherein a subatmospheric pressure is maintained in the transport pipe (2) during the entire emptying phase, wherein refuse transport air at substantially atmospheric pressure is introduced into the insertion chute (3; 103) and wherein additional air at substantially atmospheric pressure is introduced in or immediately upstream of the refuse discharge valve (RDV), **characterized by** controlling the introduction of additional air at least during the entire emptying phase and in dependence upon design characteristics of the system and/or upon varying operational parameters thereof.

12. A method of emptying a refuse insertion chute (1; 100) according to claim 11, **characterized by** regulating the flow of additional air by means of a throttle valve (ATV) provided in an additional air supply pipe (12; 112).

13. A method of emptying a refuse insertion chute (1; 100) according to claims 11 or 12, **characterized by** controlling the supply of additional air in accordance with a fixed program based on selected design characteristics of the system, said design characteristics being fed to a control unit (20), the output (22) of which controls a pilot-operated throttle valve (ATV).

14. A method of emptying a refuse insertion chute (1; 100) according to claims 11 or 12, **characterized by** controlling the supply of additional air in accordance with an optional program, based on a monitoring of chosen operational parameters (21a-c) of the system, the detected values being fed to a control unit (20) the output (22) of which controls a pilot-operated throttle valve (ATV).

15. A method of emptying a refuse insertion chute (1; 100) according to any of claims 11-14, **characterized by** supplying a flow of additional air at the latest upon opening of the refuse discharge valve (RDV) and by at least reducing said flow of additional air once the static friction of the refuse has been overcome and by closing the flow of additional air after emptying.

16. A method of emptying a refuse insertion chute (1; 100) according to any of claims 11-15, **characterized by** terminating the emptying phase by opening and then once more closing the flow of additional air, before closing the discharge valve (RDV), thereby securing complete emptying of the storage space (3; 103).

17. A method of emptying a refuse insertion chute (1; 100) according to any of claims 11-16, **characterized by** supplying the additional air from a separate additional air inlet (13), independently of the supply of transport air.

18. A method of emptying a refuse insertion chute (1) according to any of claims 11-16, **characterized by** supplying the additional air from a main transport air inlet (8), by-passing the expanded storage capacity (3), thereby indirectly controlling the separate introduction of transport air into the storage capacity in dependence upon the controlled introduction of additional air.

19. A refuse insertion chute (1; 100) of a vacuum-operated refuse collection system, said refuse chute (1; 100) communicating with a transport pipe (2) of the system through a refuse discharge valve (RDV) and being provided with a storage space (3; 103) for temporarily storing refuse (10), a transport air chute inlet (9) positioned in or upstream of the storage space (3; 103) and an additional air chute inlet (11) positioned in or immediately upstream of the refuse discharge valve (RDV), **characterized by** an additional air inlet valve (ATV) being provided in an additional air supply pipe (12; 112) for controlled supply of additional air from an atmospheric air inlet (8; 13) to the additional air chute inlet (11).

20. A refuse insertion chute (1; 100) according to claim 19, **characterized in that** the additional air inlet valve (ATV) is a pilot-operated throttle valve connected to the output (22) of a control unit (20) for controlling the supply of additional air in accordance with a fixed or optional program.

21. A refuse insertion chute (1; 100) according to claims 19 or 20, **characterized in that** the additional air inlet valve (ATV) is a variable flow regulator.

22. A refuse insertion chute (1; 100) according to any of claims 19-21, **characterized in that** the additional air inlet pipe (12; 112) is branched-off from a transport air supply pipe (7) supplying transport air from a main transport air inlet (8) to the transport air chute inlet (9), said additional air supply pipe (12; 112) supplying air from the main transport air inlet (8) to the additional air chute inlet (11), by-passing the storage space (3; 103).

23. A refuse insertion chute (1; 100) according to any of claims 19-21, **characterized in that** the additional air inlet pipe (112) is connected to a separate air inlet (13) for supplying air therefrom to the additional air chute inlet (11), independently of the transport air.

24. A refuse insertion chute (1; 100) according to any of claims 19-23, **characterized in that** the storage space (3) consists of an extended section of an essentially vertical refuse insertion chute (1), the extension consisting of a lowermost chute bend (3a) connected to a substantially horizontal transport pipe (2).

25. A refuse insertion chute (1; 100) according to any of claims 19-24, **characterized in that** the storage space (103) consists of an expanded storage volume having a cross-section exceeding that of the chute (100).

26. A refuse insertion chute (1; 100) according to any of claims 19-25, **characterized in that** the refuse discharge valve (RDV) is positioned in a substantially horizontal pipe (2).

## Patentansprüche

1. Verfahren zum Leeren eines Abfallspeicherraums (3; 103) eines vakuumbetriebenen Abfallsammelsystems, wobei Abfall (10), der zeitweilig im Speicherraum (3; 103) aufbewahrt wird, in ein Transportrohr (2) des Systems beim Öffnen eines Abfallleerventils (RDV) abgelassen wird, wobei ein Unterdruck im Transportrohr (2) während der gesamten Leerungsphase aufrechterhalten wird, um eine Schleppkraft auf das Abfallmaterial (10) durch das geöffnete Abfallleerventil (RDV) auszuüben, und wobei Luft an das aufbewahrte Abfallmaterial (10) während der Leerungsphase eingeführt wird, um für einen Strom von Transportluft und Abfallmaterial zu sorgen, **gekennzeichnet durch** das Steuern der Schleppkraft, die auf den aufbewahrten Abfall (10) ausgeübt wird, und der Konzentration von Abfallmaterial (10) in der Transportluft, mindestens während der Leerungsphase.

2. Verfahren zum Leeren eines Abfallaufbewahrungsraums (3; 103) nach Anspruch 1, **gekennzeichnet durch** das Steuern der Stärke des angewendeten Unterdrucks während der Leerungsphase **durch** die regulierte Ansaugung von zusätzlicher Luft bei im Wesentlichen atmosphärischem Druck im Abfallleerventil (RDV) oder unmittelbar stromaufwärts von demselben.

3. Verfahren zum Leeren eines Abfallaufbewahrungsraums (3; 103) nach Anspruch 2, **gekennzeichnet durch** das Steuern des Transportluftstroms während der Leerungsphase in Abhängigkeit von der regulierten Zuführung von zusätzlicher Luft.

4. Verfahren zum Leeren eines Abfallaufbewahrungsraums (3; 103) nach Anspruch 2 oder 3, **gekennzeichnet durch** das Steuern der Konzentration von Abfallmaterial (10) in der Transportluft **durch** Einführen der zusätzlichen Luft direkt in den Strom des Abfallmaterials (10) im Abfallleerventil (RDV) oder unmittelbar stromaufwärts von demselben.

5. Verfahren zum Leeren eines Abfallaufbewahrungsraums (3; 103) nach Anspruch 4, **gekennzeichnet durch** die Verwendung von zusätzlicher Luft, die in das Material eingeführt wird, als Luftmesser zum Lösen des Abfallmaterials (10) und zum verbesserten Einmischen desselben in die Transportluft.

6. Verfahren zum Leeren eines Abfallaufbewahrungsraums (3; 103) nach einem der Ansprüche 2-5, **gekennzeichnet durch** das Steuern des Ansaugens von zusätzlicher Luft auf der Basis von festen Konstruktionskennwerten des Systems.

7. Verfahren zum Leeren eines Abfallaufbewahrungsraums (3; 103) nach einem der Ansprüche 2-6, **gekennzeichnet durch** das Steuern des Ansaugens von zusätzlicher Luft auf der Basis von festgestellten Werten von Betriebsparametern des Systems.

8. Verfahren zum Leeren eines Abfallaufbewahrungsraums (3; 103) nach einem der Ansprüche 2-7, **gekennzeichnet durch** das Überwachen der tatsächlichen Stärke des Vakuums/Schleppkraft während des Leerens und **durch** Steuern des Ansaugens von zusätzlicher Luft auf der Basis der festgestellten Werte.

9. Verfahren zum Leeren eines Abfallaufbewahrungsraums (3; 103) nach einem der Ansprüche 1-8, **gekennzeichnet durch** das anfängliche Verringern der Schleppkraft, die auf den aufbewahrten Abfall (10) in einem ersten Schritt angewendet wird, und **durch** nachfolgendes Verstärken des Stroms von Transportluft **durch** den Speicherraum in einem zweiten Schritt, sobald die Haftreibung des Materials überwunden worden ist.

10. Verfahren zum Leeren eines Abfallaufbewahrungsraums (3; 103) nach Anspruch 9, **gekennzeichnet durch** das aufeinander folgende Wiederholen des ersten und zweiten Schritts nach der Leerungsphase, um das vollständige Leeren des Speicherraums (3; 103) sicherzustellen.

11. Verfahren zum Leeren eines Abfallzuführkanals (1; 100) eines vakuumbetriebenen Abfallsammelsystems, wobei der Abfall (10), der zeitweilig in einem erweiterten Speicherraum (3; 103) des Zuführkanals (1; 100) aufbewahrt wird, in ein Transportrohr (2) des Systems beim Öffnen des Abfallleerventils (RDV) abgelassen wird, wobei ein Unterdruck im Transportrohr (2) während der gesamten Leerungsphase aufrechterhalten wird, wobei die Abfalltransportluft bei im Wesentlichen atmosphärischem Druck in den Zuführkanal (1; 100) eingeführt wird und wobei zusätzliche Luft bei im Wesentlichen atmosphärischem Druck in das Abfallleerventil (RDV) oder unmittelbar stromaufwärts von demselben eingeführt wird, **gekennzeichnet durch** das Steuern der Einführung von zusätzlicher Luft mindestens während der ganzen Leerungsphase und in Abhängigkeit von Konstruktionskennwerten des Systems und/oder von variablen Betriebsparameter desselben.

12. Verfahren zum Leeren eines Abfallzuführkanals (1; 100) nach Anspruch 11, **gekennzeichnet durch** die Regulierung des Stroms von zusätzlicher Luft mittels einer Stellklappe (ATV) die im Zuführrohr (12; 112) für zusätzliche Luft bereitgestellt ist.

13. Verfahren zum Leeren eines Abfallzuführkanals (1; 100) nach Anspruch 11 oder 12, **gekennzeichnet durch** das Steuern der Zufuhr von zusätzlicher Luft gemäß einem festen Programm, das auf ausgewählten Konstruktionskennwerten des Systems beruht, wobei die Konstruktionskennwerte in eine Steuereinheit (20) eingespeist sind, deren Ausgabe eine mit Vorsteuer betriebene Stellklappe (ATV) steuert.

14. Verfahren zum Leeren eines Abfallzuführkanals (1; 100) nach Anspruch 11 oder 12, **gekennzeichnet durch** das Steuern der Zufuhr von zusätzlicher Luft gemäß einem optionalen Programm, das auf einer Überwachung der gewählten Betriebsparameter (21a-c) des Systems beruht, wobei die festgestellten Werte in eine Steuereinheit (20) eingespeist werden, deren Ausgabe (22) eine mit Vorsteuer betriebene Stellklappe (ATV) steuert.

15. Verfahren zum Leeren eines Abfallzuführkanals (1; 100) nach einem der Ansprüche 11 bis 14, **gekennzeichnet durch** Zufuhr eines Stroms von zusätzlicher Luft spätestens beim Öffnen des Abfallleerventils (RDV) und **durch** mindestens Reduzierung des Stroms von zusätzlicher Luft, sobald die Haftreibung des Abfalls überwunden worden ist, und **durch** Sperren des Stroms zusätzlicher Luft nach dem Leeren.

16. Verfahren zum Leeren eines Abfallzuführkanals (1; 100) nach einem der Ansprüche 11 bis 15, **gekennzeichnet durch** Beenden der Leerungsphase **durch** Öffnen und dann nochmaliges Sperren des Stroms von zusätzlicher Luft, bevor das Abfallleerventil (RDV) geschlossen ist, wodurch die vollständige Leerung des Speicherraums (3; 103) sichergestellt ist.

17. Verfahren zum Leeren eines Abfallzuführkanals (1; 100) nach einem der Ansprüche 11 bis 16, **gekennzeichnet durch** Zufuhr der zusätzlichen Luft aus einem separaten Einlass (13) für zusätzliche Luft, unabhängig von der Zufuhr von Transportluft.

18. Verfahren zum Leeren eines Abfallzuführkanals (1) nach einem der Ansprüche 11 bis 16, **gekennzeichnet durch** Zufuhr der zusätzlichen Luft aus einem Haupttransportlufteinlass (8), Umgehen des erweiterten Speicherraums (3), wodurch indirekt die separate Einführung von Transportluft in den Speicherraum in Abhängigkeit von der kontrollierten Einführung zusätzlicher Luft gesteuert wird.

19. Abfallzuführkanal (1; 100) eines vakuumbetriebenen Abfallsammelsystems, wobei der Abfallzuführkanal (1; 100) mit einem Transportrohr (2) des Systems über ein Abfallleerventil (RDV) in Verbindung steht und mit einem Speicherraum (3; 103) zur zeitweiligen Speicherung von Abfall (10), einem Transportluftkanaleinlass (9), der im Speicherraum (3; 103) oder stromaufwärts von demselben positioniert ist, und einem Zusatzluftkanaleinlass (11), der im Abfallleerventil (RDV) oder unmittelbar stromaufwärts von demselben positioniert ist, ausgestattet ist, **gekennzeichnet durch** ein Zusatzlufteinlassventil (ATV), das in einem Zusatzluftzufuhrrohr (12; 112) zur kontrollierten Zufuhr von zusätzlicher Luft aus einem Einlass (8; 13) für atmosphärische Luft zum Kanaleinlass (11) für Zusatzluft bereitgestellt ist.

20. Abfallzuführkanal (1; 100) nach Anspruch 19, **dadurch gekennzeichnet, dass** das Zusatzlufteinlassventil (ATV) eine mit Vorsteuerung betriebene Stellklappe ist, die mit dem Ausgang (22) einer Steuereinheit (20) zur Steuerung der Zufuhr von zusätzlicher Luft gemäß einem festen oder optionalen Programm verbunden ist.

21. Abfallzuführkanal (1; 100) nach Anspruch 19 oder 20, **dadurch gekennzeichnet, dass** das Zusatzlufteinlassventil (ATV) ein variabler Durchflussmengenregler ist.

22. Abfallzuführkanal (1; 100) nach einem der Ansprüche 19 bis 21, **dadurch gekennzeichnet, dass** das Zusatzlufteinlassrohr (12; 112) von einem Transportluftzufuhrrohr (7) abzweigt, das Transportluft aus einem Haupttransportlufteinlass (8) dem Transportluftkanaleinlass (9) zuführt, wobei das Zusatzluftzufuhrrohr (12; 112) Luft aus dem Haupttransportlufteinlass (8) dem Zusatzluftkanaleinlass (11) zuführt, wobei der Speicherraum (3; 103) umgangen wird.

23. Abfallzuführkanal (1; 100) nach einem der Ansprüche 19 bis 21, **dadurch gekennzeichnet, dass** das Zusatzlufteinlassrohr (112) mit einem separaten Lufteinlass (13) zur Zufuhr von Luft daraus zum Zusatzluftkanaleinlass (11), unabhängig von der Transportluft, verbunden ist.

24. Abfallzuführkanal (1; 100) nach einem der Ansprüche 19 bis 23, **dadurch gekennzeichnet, dass** der Speicherraum (3) aus einem erweiterten Abschnitt eines im Wesentlichen vertikalen Abfallzufuhrkanals (1) besteht, wobei die Erweiterung aus einer unteren Kanalbiegung (3a) besteht, die mit einem im Wesentlichen horizontalen Transportrohr (2) verbunden ist.

25. Abfallzuführkanal (1; 100) nach einem der Ansprüche 19 bis 24, **dadurch gekennzeichnet, dass** der Speicherraum (103) aus einem erweiterten Speichervolumen besteht, das einen Querschnitt aufweist, welcher den des Kanals (100) übersteigt.

26. Abfallzuführkanal (1; 100) nach einem der Ansprüche 19 bis 25, **dadurch gekennzeichnet, dass** das Abfallleerventil (RDV) in einem im Wesentlichen horizontalen Rohr (2) positioniert ist.

## Revendications

1. Procédé de déchargement d'un espace de stockage des déchets (3 ; 103) d'un système de collecte des déchets commandé par dépression, dans lequel les déchets (10) stockés de manière temporaire dans ledit espace de stockage (3 ; 103) sont évacués dans une conduite de transport (2) du système lors de l'ouverture d'une soupape d'évacuation des déchets (SED), dans lequel une pression sous-atmosphérique est maintenue dans la conduite de transport (2) au cours de la phase de déchargement complète pour appliquer une résistance au matériau de déchet (10) au travers de la soupape d'évacuation des déchets (SED) ouverte et dans lequel de l'air est introduit dans le matériau de déchet stocké (10) au cours de la phase de déchargement pour fournir un écoulement d'air de transport et de matériau de déchet, **caractérisé par** le contrôle de la résistance appliquée aux déchets stockés (10) et la concentration de matériau de déchet (10) dans l'air de transport, au moins au cours de la phase de déchargement.

2. Procédé de déchargement d'un espace de stockage des déchets (3 ; 103) selon la revendication 1, **caractérisé par** le contrôle du niveau de pression sous-atmosphérique appliquée au cours de la phase de déchargement par une entrée régulée d'air supplémentaire à substantiellement la pression atmosphérique dans ou immédiatement en amont de la soupape d'évacuation des déchets (SED).

3. Procédé de déchargement d'un espace de stockage des déchets (3 ; 103) selon la revendication 2, **caractérisé par** le contrôle de l'écoulement d'air de transport au cours de la phase de déchargement en fonction de l'introduction régulée d'air supplémentaire.

4. Procédé de déchargement d'un espace de stockage des déchets (3 ; 103) selon les revendications 2 ou 3, **caractérisé par** le contrôle de la concentration de matériau de déchet (10) dans l'air de transport en introduisant de l'air supplémentaire directement dans l'écoulement du matériau de déchet (10) dans ou immédiatement en amont de la soupape d'évacuation des déchets (SED).

5. Procédé de déchargement d'un espace de stockage des déchets (3 ; 103) selon la revendication 4, **caractérisé par** l'utilisation d'air supplémentaire étant introduit dans le matériau en tant que lame d'air pour décompacter le matériau de déchet (10) et améliorer son mélangeage dans l'air de transport.

6. Procédé de déchargement d'un espace de stockage des déchets (3 ; 103) selon l'une quelconque des revendications 2 à 5, **caractérisé par** le contrôle de l'entrée d'air supplémentaire en fonction de caractéristiques de conception fixées du système.

7. Procédé de déchargement d'un espace de stockage des déchets (3; 103) selon l'une quelconque des revendications 2 à 6, **caractérisé par** le contrôle de l'entrée d'air supplémentaire en fonction de valeurs détectées de paramètres opérationnels du système.

8. Procédé de déchargement d'un espace de stockage des déchets (3 ; 103) selon l'une quelconque des revendications 2 à 7, **caractérisé par** la surveillance du niveau réel de vide / de la résistance au cours du déchargement et par le contrôle de l'entrée d'air supplémentaire en fonction des valeurs détectées.

9. Procédé de déchargement d'un espace de stockage des déchets (3 ; 103) selon l'une quelconque des revendications 1 à 8, **caractérisé par** la diminution initiale de la résistance appliquée aux déchets stockés (10) dans une première étape et ensuite, une fois que la friction statique du matériau a été dépassée, par l'augmentation de l'écoulement de l'air de transport au travers de l'espace de stockage dans une deuxième étape.

10. Procédé de déchargement d'un espace de stockage des déchets (3 ; 103) selon la revendication 9, **caractérisé par** la répétition séquentielle des première et deuxième étapes après la phase de déchargement, afin d'assurer un déchargement complet de l'espace de stockage (3; 103).

11. Procédé de déchargement d'une colonne d'insertion vide-ordures (1 ; 100) d'un système de collecte des déchets commandé par dépression, dans lequel les déchets (10) stockés de manière temporaire dans un espace de stockage étendu (3 ; 103) de ladite colonne vide-ordures (1 ; 100) sont évacués dans une conduite de transport (2) du système lors de l'ouverture de la soupape d'évacuation des déchets (SED), dans lequel une pression sous-atmosphérique est maintenue dans la conduite de transport (2) au cours de la phase de déchargement complète, dans lequel de l'air de transport des déchets à substantiellement la pression atmosphérique est introduit dans la colonne d'insertion (1 ; 100) et dans lequel de l'air supplémentaire à substantiellement la pression atmosphérique est introduit dans ou immédiatement en amont de la soupape d'élimination des déchets (SED), **caractérisé par** le contrôle de l'introduction d'air supplémentaire au moins au cours de la phase de déchargement complète et en fonction de caractéristiques de conception du système et/ou de paramètres opérationnels divers de celui-ci.

12. Procédé de déchargement d'une colonne d'insertion vide-ordures (1 ; 100) selon la revendication 11, **caractérisé par** la régulation de l'écoulement d'air supplémentaire au moyen d'un papillon des gaz (ATV) pourvu dans la conduite d'alimentation en air supplémentaire (12 ; 112).

13. Procédé de déchargement d'une colonne d'insertion vide-ordures (1 ; 100) selon les revendications 11 ou 12, **caractérisé par** 1e contrôle de l'alimentation en air supplémentaire en fonction d'un programme fixé fondé sur des caractéristiques de conception sélectionnées du système, lesdites caractéristiques de conception étant alimentées à l'unité de contrôle (20), dont le résultat (22) contrôle un papillon des gaz commandé par pilote (ATV).

14. Procédé de déchargement d'une colonne d'insertion vide-ordures (1 ; 100) selon les revendications 11 ou 12, **caractérisé par** le contrôle de l'alimentation en air supplémentaire selon un programme en option, fondé sur une surveillance de paramètres opérationnels choisis (21 a-c) du système, les valeurs détectées étant alimentées à une unité de contrôle (20) dont le résultat (22) contrôle un papillon des gaz commandé par pilote (ATV).

15. Procédé de déchargement d'une colonne d'insertion vide-ordures (1 ; 100) selon l'une quelconque des revendications 11 à 14, **caractérisé par** l'alimentation d'un écoulement d'air supplémentaire au plus tard lors de l'ouverture de la soupape d'évacuation des déchets (SED) et par au moins la réduction dudit écoulement d'air supplémentaire une fois que la friction statique des déchets a été dépassée et par la fermeture de l'écoulement d'air supplémentaire après le déchargement.

16. Procédé de déchargement d'une colonne d'insertion vide-ordures (1; 100) selon l'une quelconque des revendications 11 à 15, **caractérisé par** l'arrêt de la phase de déchargement en ouvrant, puis une fois de plus en fermant l'écoulement d'air supplémentaire, avant de fermer la soupape d'évacuation (SED), assurant ainsi un déchargement complet de l'espace de stockage (3 ; 103).

17. Procédé de déchargement d'une colonne d'insertion vide-ordures (1; 100) selon l'une quelconque des revendications 11 à 16, **caractérisé par** l'alimentation en air supplémentaire à partir d'une entrée d'air supplémentaire séparée (13), indépendamment de l'alimentation en air de transport.

18. Procédé de déchargement d'une colonne d'insertion vide-ordures (1) selon l'une quelconque des revendications 11 à 16, **caractérisé par** l'alimentation en air supplémentaire à partir d'une entrée d'air de transport principale (8), le dépassement de la capacité de stockage étendue (3), contrôlant ainsi indirectement l'introduction séparée d'air de transport dans la capacité de stockage en fonction de l'introduction contrôlée d'air supplémentaire.

19. Colonne d'insertion vide-ordures (1 ; 100) d'un système de collecte des déchets commandé par dépression, ladite colonne vide-ordures (1 ; 100) communiquant avec une conduite de transport (2) du système au travers d'une soupape d'évacuation des déchets (SED) et étant pourvue d'un espace de stockage (3 ; 103) pour stocker de manière temporaire des déchets (10), d'une entrée de colonne d'air de transport (9) positionnée dans ou en amont de l'espace de stockage (3 ; 103) et d'une entrée de colonne d'air supplémentaire (11) positionnée dans ou immédiatement en amont de la soupape d'évacuation des déchets (SED), **caractérisée par** une soupape d'entrée d'air supplémentaire (ATV) étant pourvue dans une conduite d'alimentation en air supplémentaire (12 ; 112) pour contrôler l'alimentation en air supplémentaire à partir d'une entrée d'air atmosphérique (8 ; 13) vers l'entrée de colonne d'air supplémentaire (11).

20. Colonne d'insertion vide-ordures (1 ; 100) selon la revendication 19, **caractérisée en ce que** la soupape d'entrée d'air supplémentaire (ATV) est un papillon des gaz commandé par pilote raccordé à la sortie (22) de l'unité de contrôle (20) pour contrôler l'alimentation en air supplémentaire selon un programme fixé ou en option.

21. Colonne d'insertion vide-ordures (1 ; 100) selon les revendications 19 ou 20, **caractérisée en ce que** 1a soupape d'entrée d'air supplémentaire (ATV) est un régulateur d'écoulement variable.

22. Colonne d'insertion vide-ordures (1 ; 100) selon l'une quelconque des revendications 19 à 21, **caractérisée en ce que** 1a conduite d'entrée d'air supplémentaire (12 ; 112) est dérivée de la conduite d'alimentation en air de transport (7) alimentation en air de transport à partir d'une entrée d'air de transport principale (8) vers l'entrée de colonne d'air de transport (9), ladite conduite d'alimentation en air supplémentaire (12 ; 112) alimentation en air depuis l'entrée d'air de transport principale (8) vers l'entrée de colonne d'air supplémentaire (11), en contournant l'espace de stockage (3 ; 103).

23. Colonne d'insertion vide-ordures (1 ; 100) selon l'une quelconque des revendications 19 à 21, **caractérisée en ce que** la conduite d'entrée d'air supplémentaire (112) est raccordée à une entrée d'air séparée (13) pour alimenter en air à partir de celle-ci vers l'entrée de colonne d'air supplémentaire (11), indépendamment de l'air de transport.

24. Colonne d'insertion vide-ordures (1 ; 100) selon l'une quelconque des revendications 19 à 23, **caractérisée en ce que** l'espace de stockage (3) consiste en une section étendue d'une colonne d'insertion vide-ordures essentiellement verticale (1), l'extension étant constituée d'un coude de colonne le plus bas (3a) raccordé à une conduite de transport substantiellement horizontale (2).

25. Colonne d'insertion vide-ordures (1 ; 100) selon l'une quelconque des revendications 19 à 24, **caractérisée en ce que** l'espace de stockage (103) consiste en un volume de stockage étendu présentant une section transversale dépassant celle de la colonne (100).

26. Colonne d'insertion vide-ordures (1 ; 100) selon l'une quelconque des revendications 19 à 25, **caractérisée en ce que** la soupape d'évacuation des déchets (SED) est positionnée dans une conduite substantiellement horizontale (2).
